# EUROPEAN PATENT SPECIFICATION

(11) **EP 1 152 956 B1**
(45) Date of publication and mention of the grant of the patent: **03.05.2006**
(21) Application number: 00902765.7
(22) Date of filing: 10.02.2000
(51) Int. Cl.: B65D 25/20

(54) **IMPROVEMENTS IN FLUID CONTAINERS**
VERBESSERUNGEN FÜR FLÜSSIGKEITSBEHÄLTER
AMELIORATIONS RELATIVES A DES CONTENANTS DE LIQUIDE

(30) Priority: 10.02.1999 GB 9902834; 30.06.1999 GB 9915333
(43) Date of publication of application: 14.11.2001
(73) Proprietor: Skerra PTY. Limited, Varroville, NSW 2566 (AU)
(72) Inventor: SKERRA, Helmut, Wilhelm, Varroville, NSW 2566 (AU)
(74) Representative: Barnfather, Karl Jon
(86) International application number: PCT/GB2000/000426
(87) International publication number: WO 2000/047483

(56) References cited:
- EP-A- 0 679 605
- EP-A- 0 726 225
- WO-A-96/26076
- DE-A- 19 510 458
- DE-C- 19 520 131
- GB-A- 2 288 103

## Description

The invention relates to improvements in containers such as kegs for housing pressurised fluids like beer or similar. In particular, the invention relates to providing such kegs with the transponder for identification purposes.

It is known to mark kegs for example with written details of the location and date of last filling and the nature of the contents of the keg. However, such written details can sometimes become detached from the keg and, in an array of kegs each keg must be addressed individually to identify its contents or other representative information.

EP 0726225 discloses a bottle valve fitting, in which a transponder is arranged in a closed cavity.

GB 2288103 discloses a transponder which encircles a valve fitting of a gas cylinder.

The invention seeks to improve containers and means for identification thereof and or the contents thereof.

The invention provides a keg valve assemby according to Claim 1.

In one form of the invention, the transponder is located in an upper flange of the fitting. The flange is preferably in the upper part of the fitting which abuts a connector during the ingress and egress of fluid to and from the keg, which flange is readily accessible especially during storage of a keg not in use and on many other occasions, such as during cleaning, tilting, transporting, loading or unloading the container for example. Of course, the transponder can be remotely addressed using a suitable receiver and transmitted unit.

Preferably, the transponder is located in a recess which can be milled into the body of the flange.

Preferably, a cup is provided in the upper end of the down- tube which cup can be mechanically fixed in the down-tube for example using a co-operating lip and flange arrangement.

Preferably, the transponder is insulated against mechanical damage. Preferably the insulation comprises a rubber material such as nitrate rubber. The insulation material can be of a two component non-metallic material.

Beneficially, the nature of the cup and or recess arrangement enables an insulated transponder to be located in an accessible part of the fitting F in a stored keg K. Beneficially, such transponders can be removed and replaced by removal of the insulating material from the recess. The upper recess can be defined by a narrower aperture than the underlying cavity thus providing a restriction to removal of the transponder or insulated transponder arrangement.

Embodiments of the invention will now be described, by way of example only, with reference to the accompanying drawings, in which:
Figure 1 is a schematic side elevation view of a keg according to the invention;
Figure 2 is a schematic partial sectional view of a down-tube or centrepiece according to the invention;
Figure 3 is an enlarged sectional view of the top of the tube showing figure 2;
Figure 4 is a schematic plan elevation view from above of the down-tube shown in figures 2 and 3;
Figure 5 is a schematic plan elevation view from above of part of a fitting F according to the invention;
Figure 6 is a schematic sectional side elevation view radially through the transponder of the fitting F shown in figure 5;
Figure 7 is a schematic side elevation view of a further transponder in a recess in a flange according to another embodiment of the invention;
Figure 8 is a schematic side elevation view of a further embodiment of a neck arrangement for a container according to the invention;
Figure 9 is a plan elevation view of the neck shown in figure 8;
Figure 10 is a plan elevation view of the neck shown in figure 8 with a retaining ring fitted,
Figure 11 is a plan elevation view of a further embodiment of the invention;
Figure 12 is a plan elevation view of a cross - section of the embodiment shown in Figure 11, showing the position of the transponder and an associated antenna;
Figure 13 is a plan view of a further embodiment of a valve fitting according to the invention; and
Figure 14 is a side elevation partial sectional view of the valve fitting shown in Figure 13.

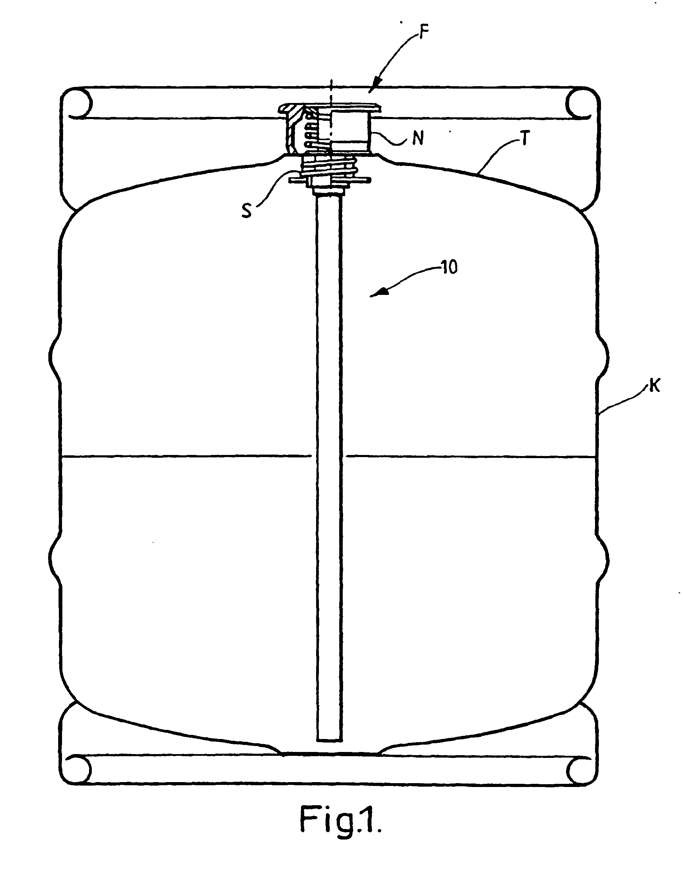

Referring to figure 1 there is shown a keg K for housing pressurised fluid such as beer, comprising a valve fitting F comprising a valve which is can be opened and closed to allow ingress and egress of fluid to and from the keg K during filling and during use.

The keg valve assembly comprises a fitting F comprising an upper flange against which a connector is attached and a neck portion N between the flange and the top wall T of keg K, it further comprises a spring S and a down-tube 10 for example which components combine to enable a connector to be attached to fitting F and enable movement of a valve between open and closed positions thereby to enable filling and removal of fluid to and from the kegs. Such a fitting F can for example be of the type described in our Patent Application No. GB9724225.9 wherein the neck N is welded to the rim of the aperture in the top wall T of keg K, alternatively the neck N can be integral with the keg. Hence, neck N can be integrally formed in the keg wall or attachable after manufacture of the keg, within the term 'fitting' as used here. Similarly, neck N can be formed integrally with the flange, or formed as a separate component and then later attached to the flange.

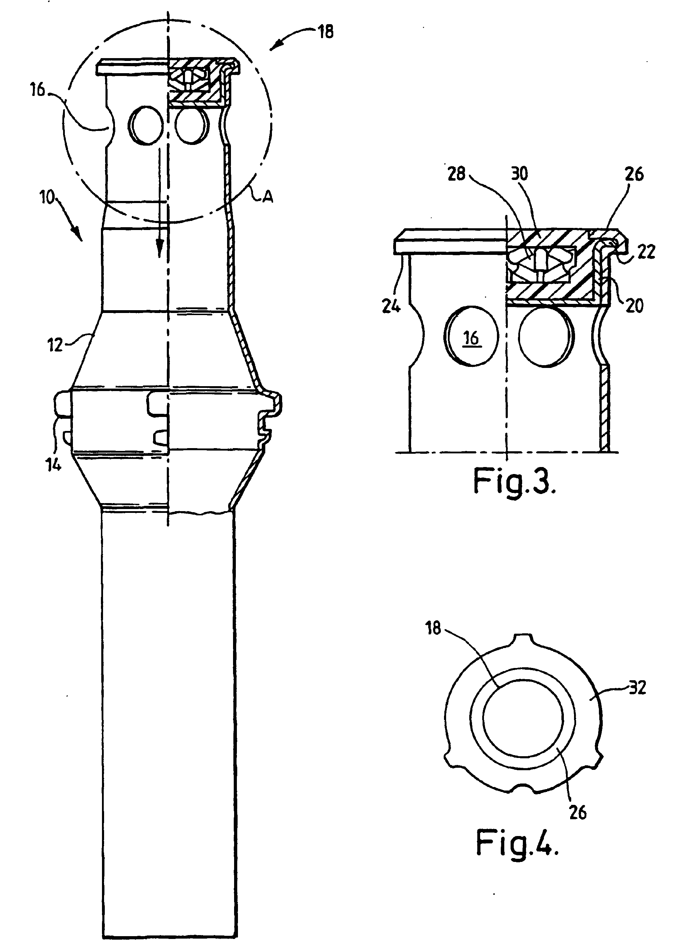

Referring to figure 2, a partial sectional view of down-tube 10 shown in figure 1 is shown. Down-tube 10 facilitates in the syphoning of fluid back out of keg k during use (including emptying and cleaning) and comprises a hollow tube 12 having lugs 14 for co-operating with part of fitting F to locate down tube 10. Also provided are suitable apertures 16 near the upper end of down-tube 10, adjacent to which is provided a transponder section 18 consisting of a cup piece 20 preferably having a lip 22 which operably abuts a shoulder 24 in the upper end of down-tube 10. To fix cup 20 in position, a sealing flange or rim 26 is folded over lip 22 as shown in figure 3.

Downtube 10 can be formed from a two part construction for example, wherein the upper part comprises substantially those features shown in Figure 3 which upper part, which can be referred to as a centre-piece, is attachable to a tube or remaining part of a sphere which extends into the keg.

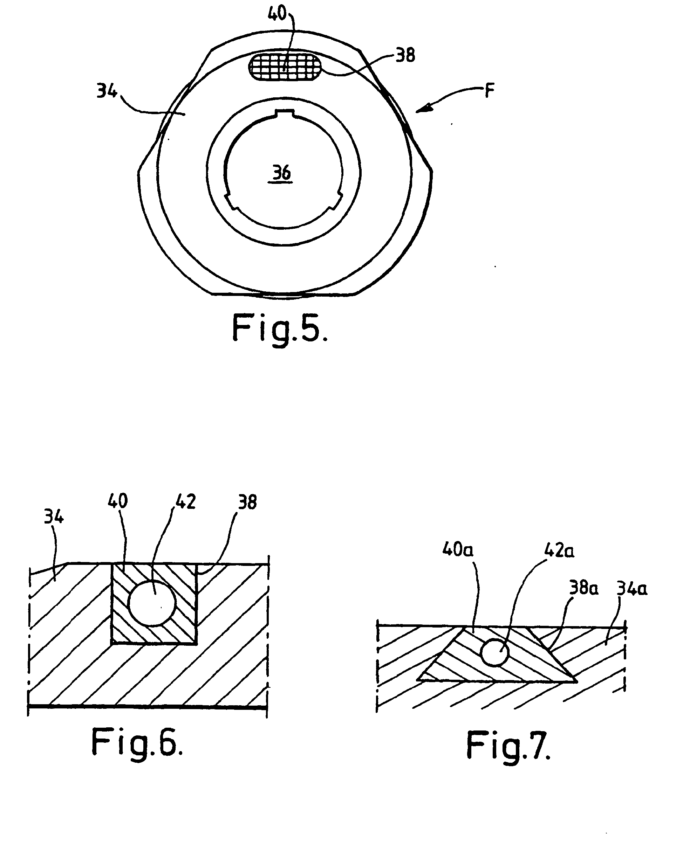

A transponder 28 in encapsulated in suitable insulating materials 30 such as nitrile rubber or hard plastic in the form a disk housing transponder 28 which is located into cup 20. Transponder 28 can be encapsulated by first placing it in cup 20, then pouring liquid rubber or plastics into the cup 20 to surround transponder 28. The rubber or plastics insulating material is then allowed to harden. If plastics are used to make up the insulating material 30, they may be of the 'two component' form wherein two plastics components are mixed together prior to being poured into the cup, and then allowed to -harden. Preferably, the insulation material 30 provides a mechanical or frictional fit in cup 20 in the top of tube 10 and is held by rim 26 thereby to locate the transponder as shown in figures 2 and 3. As can be seen in figure 4, the transponder section 18 is therefore centrally located at the top of down-tube 10 which is typically located in the centre of an upper flange to fitting F as described earlier.

Referring to figures 5 and 6, there in shown a further embodiment of the invention wherein the upper flange 34 of fitting F comprises an aperture 36 for a down-tube such as down-tube 10, a recess 38 which can for example be milled into the body of the flange 34 (for example into a lozenge shape) thereby to receive a suitably shaped arrangement of insulation 40 and transponder 42 which again can be mechanically and or frictionally located within recess 38 as shown again in the sectional view of figure 6 which is taken along a radial projection from the centre of flange 34 shown in figure 5.

Figure 7 shows how the recess can be defined by a narrower apertural slot than the width of the cavity thereby to provide a further mechanical restriction to the removal of the insulating material. As shown in figure 7, flange 34a can comprise a recess 38a which tapers outwardly away from the aperture on the surface of flange 34a. The extent of taper is variable but at an angle of approximately 50° as shown, a good restriction to the removal of insulating material 40a and therefore transponder 42a is provided. Of course, the taper need not be so great and for example a taper in the order of 10° would be suitable. Additionally, the bottom of the taper can be curved into the bottom of the recess rather than providing the angled corner shown in figure 7. Of course, the insulating material 40a can be formed using the same method and materials as described for the first embodiment.

Preferably a keg is provided with a fitting F having only one transponder, but two can be provided for example by combining flange 38 with down-tube 10 in the fitting.

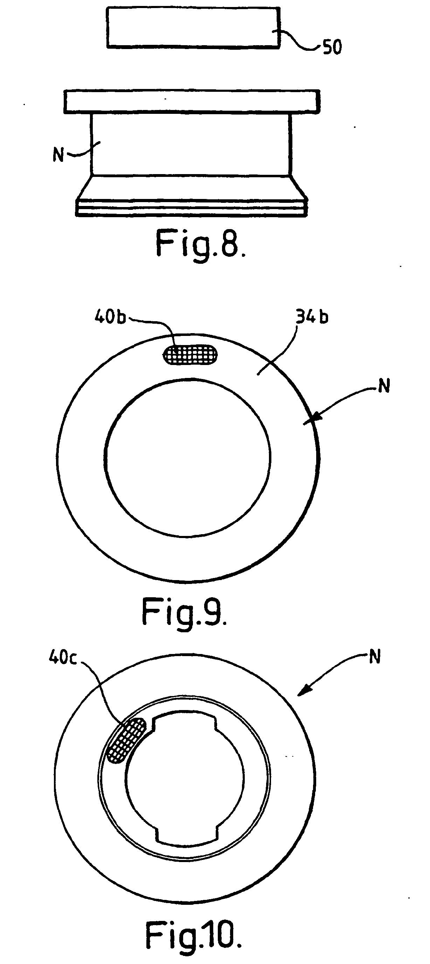

Referring to figures 8, 9 and 10, there is shown a further embodiment of a neck N for a container. In this embodiment, the fitting comprising down tube 10 and valve assembly is located within a central aperture in neck N and retained therein by a retaining ring 50 which can for example have suitable outer threading for co-operating with threading on the inside diameter of neck N. An upper flange for engaging a connector is provided on neck N. Flange 34b comprises a recess for an insulated transponder arrangement similar to the earlier embodiments. Alternatively, shown in Figure 10, or as well, part of retaining ring 50 can comprise a recess for housing a further transponder and/or insulator transponder arrangement 40c. Neck N can be integrally formed in the keg wall or attachable after manufacture of the keg and in either mode included here within the term fitting as part of the valve arrangement.

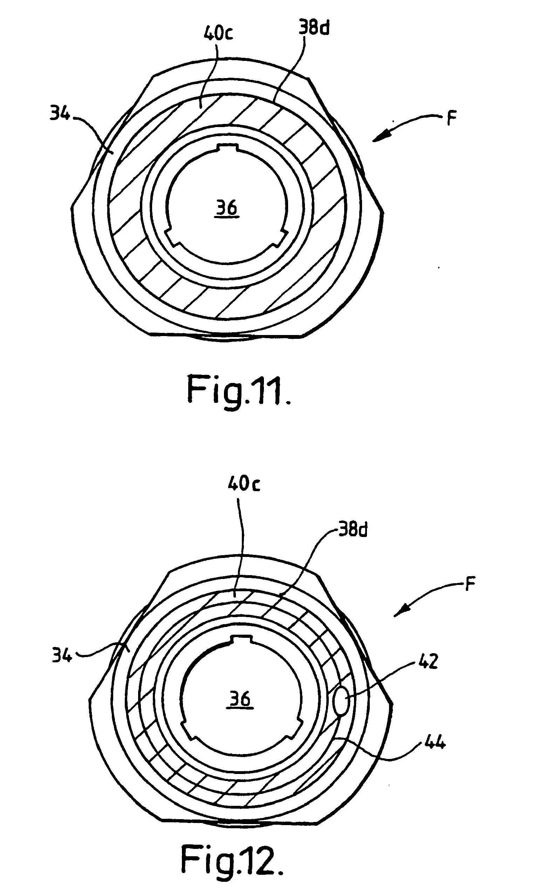

A yet further embodiment of the invention is shown in Figures 11 and 12. In this case, the upper flange 34 of fitting F comprises an aperture 36 as before, but in this embodiment the recess 38d is of an annular form, extending circumferentially around aperture 36.

As before, recess 38d can receive a suitably shaped arrangement of insulation 40c and a transponder 42, which can be mechanically and/or frictionally located in recess 38d, as shown previously in Figures 6 and 7.

Figure 12 shows a schematic plan view of a horizontal cross - section taken through part of recess 38d, to illustrate the positioning of the transponder 42. In this case, transponder 42 has an antenna 44 to receive and/or transmit signals. Antenna 44 conveniently locates within the annular recess 38d, and is shown as a simple loop antenna. Antenna 44 is shown extending as a single loop throughout reess 38d. However, it could be of shorter length or conversely comprise several loops as required. Also although a looped antenna is shown any type of antenna sized to locate within recess 38d may be used in this embodiment of the invention. The antenna is secured within the recess 38d in the same way as the transponder 42.

This embodiment with the annular recess is shown located on a flange type as previously shown in 5. However, it would be equally applicable to the different arrangement shown in Figures 8, 9 and 10. Also, the protective insulation 40c could be formed using the same materials and method as described earlier, for example by pouring a 'two component' plastics mixture into annular recess 38d.

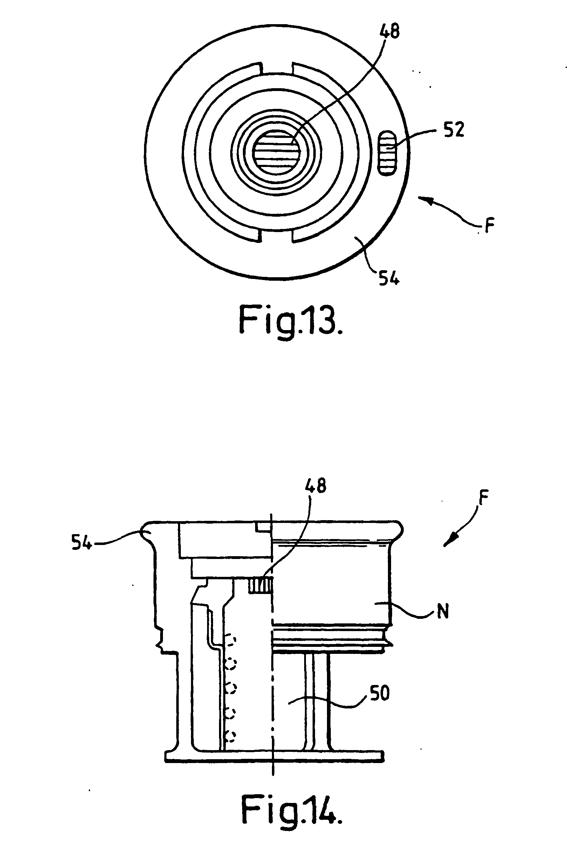

In addition to the so called flat top type of valve fitting F shown in the earlier drawings consisting of a circular upper flange as shown in Figures 8, 9 and 10, or a trilobe flange as shown in Figures 5, 11 and 12, the invention is applicable also to a so called well type valve fitting F shown in Figures 13 and 14. Here, a transponder 48 can be fitted to the top of a downtube 50 in a similar manner to that shown for example in Figure 3. Alternatively, the transponder 52 shown in Figure 3 can be fitted in the annular flange 54 at the upper end of the valve fitting F.

In another form, both transponders 48 and 52 can be provided whereby one transponder provides information about the keg itself such as date of manufacture and number of refills, whereas the other transponder (preferably associated with the downtube or centre-piece) provides information about the last refill such as the type of liquid inserted and the relevant date for example.

## Claims

1. A keg valve assembly comprising a fitting (F) and a spear or down tube (10), **characterised in that** the upper part of the fitting or spear or down tube defines a recess, in which a transponder (28) is located.

2. A keg valve assembly according to claim 1, wherein the recess is defined by a cavity and an apertural slot, the slot being narrower than the width of the cavity to provide a mechanical restriction to the removal of a part from the cavity.

3. A keg valve assembly according to claim 2, wherein the recess is formed by milling.

4. A keg valve assembly according to claims 1, 2 or 3, wherein the transponder is located on a flange on the keg valve fitting.

5. A keg valve assembly according to claim 4, wherein the flange is on an upper part of the keg valve fitting.

6. A keg valve assembly according to claim 4 or 5, wherein the recess is obround-shaped.

7. A keg valve assembly according to claims 4 or 5, wherein the recess is of an annular shape.

8. A keg valve assembly according to any preceding claim, wherein a cup is provided in the upper end of the spear or down-tube to receive the transponder.

9. A keg valve assembly according to claim 8, wherein the cup is mechanically fixed within a recess in the spear or down-tube.

10. A keg valve assembly according to claim 9, wherein the cup is mechanically fixed within a recess in the spear or down-tube by means of a co-operating lip and flange arrangement.

11. A keg valve assembly according to any of claims 1-10, wherein the transponder is insulated against mechanical damage.

12. A keg valve assembly according to claim 11, wherein the insulation comprises a rubber or plastics material.

13. A keg valve assembly according to claim 12, wherein the insulation is a nitrile rubber.

14. A keg valve assembly according to clamis 11, 12 or 13, wherein the insulation comprises a two component non-metallic material.

15. A keg valve assembly according to any of claims 1 to 14, wherein when the transponder in located in a recess, the transponder can be removed and replaced by removal of an insulating material surrounding the transponder.

16. A keg valve assembly according to any preceding claim, comprising two or more transponders.

17. A keg valve assembly according to any preceding claim of the flat top type, or the well type.

18. A keg for pressurised fluid comprising a valve assembly according to any of Claims 1 to 17.

## Patentansprüche

1. Faßventilanordnung mit einem Fitting (F) und einer Lanze oder einem Steigrohr (10), **dadurch gekennzeichnet, daß** der obere Teil des Fittings oder der Lanze oder des Steigrohres eine Ausnehmung bildet, in der ein Transponder (28) angeordnet ist.

2. Faßventilanordnung nach Anspruch 1, bei der die Ausnehmung durch einen Hohlraum und einen eine Öffnung bildenden Schlitz gebildet wird, wobei der Schlitz schmaler ist als die Breite des Hohlraums, um einen mechanischen Widerstand gegen das Entfernen eines Teils aus dem Hohlraum zu bilden.

3. Faßventilanordnung nach Anspruch 2, bei der die Ausnehmung durch Fräsen gebildet ist.

4. Faßventilanordnung nach den Ansprüchen 1, 2 odeer 3, bei der der Transponder an einem Flansch an dem Faßventilfitting angeordnet ist.

5. Faßventilanordnung nach Anspruch 4, bei der der Flansch auf einem oberen Teil des Faßventilfittings angeordnet ist.

6. Faßventilanordnung nach Anspruch 4 oder 5, bei der die Ausnehmung eine abgerundete Form hat.

7. Faßventilanordnung nach Anspruch 4 oder 5, bei der die Ausnehmung eine ringförmige Gestalt hat.

8. Fafiventilanordnung nach einem der vorstehenden Ansprüche, bei der im oberen Ende der Lanze oder des Steigrohres ein Topf zur Aufnahme des Transponders vorgesehen ist.

9. Faßventilanordnung nach Anspruch 8, bei der der Topf mechanisch in einer Ausnehmung in der Lanze oder dem Steigrohr fixiert ist.

10. Faßventilanordnung nach Anspruch 9, bei der der Topf mit Hilfe einer Anordnung aus einem Flansch und einer damit zusammenwirkenden Lippe mechanisch in einer Ausnehmung in der Lanze oder dem Steigrohr fixiert ist.

11. Faßventilanordnung nach einem der Ansprüche 1 bis 10, bei der der Transponder gegen mechanische Beschädigung isoliert ist.

12. Faßventilanordnung nach Anspruch 11, bei der die Isolierung ein Gummi- oder Kunststoffmaterial aufweist.

13. Faßventilanordnung nach Anspruch 12, bei der die Isolierung ein Nitrilgummi ist.

14. Faßventilanordnung nach den Ansprüchen 11, 12 oder 13, bei der die Isolierung ein zweikomponentiges nichtmetallisches Material aufweist.

15. Faßventilanordnung nach einem der Ansprüche 1 bis 14, bei der, wenn der Transponder in einer Ausnehmung angeordnet ist, der Transponder entfernt und ausgetauscht werden kann, indem ein den Transponder umgebendes Isolationsmaterial entfernt wird.

16. Faßventilanordnung nach einem der vorstehenden Ansprüche, mit zwei oder mehr Transpondern.

17. Faßventilanordnung nach einem der vorstehenden Ansprüche, mit flacher Oberseite oder in Napfform.

18. Faß für ein unter Druck stehendes Fluid, mit einer Faßventilanordnung nach einem der Ansprüche 1 bis 17.

## Revendications

1. Ensemble de robinet de fût comportant un raccord (F) et une tige ou un tube descendant (10), **caractérisé en ce que** la partie supérieure du raccord ou de la tige ou du tube descendant définit un évidement, dans lequel est placé un transpondeur (28).

2. Ensemble de robinet de fût selon la revendication 1, dans lequel l'évidement est défini par une cavité et une fente d'ouverture, la fente étant plus étroite que la largeur de la cavité pour fournir un empêchement mécanique à l'enlèvement d'une partie depuis la cavité.

3. Ensemble de robinet de fût selon la revendication 2, dans lequel l'évidement est formé par fraisage.

4. Ensemble de robinet de fût selon les revendications 1, 2 ou 3, dans lequel le transpondeur est situé sur un rebord du raccord de robinet de fût.

5. Ensemble de robinet de fût selon la revendication 4, dans lequel le rebord est sur une partie supérieure du raccord de robinet de fût.

6. Ensemble de robinet de fût selon la revendication 4 ou 5, dans lequel l'évidement est de forme oblongue.

7. Ensemble de robinet de fût selon la revendication 4 ou 5, dans lequel l'évidement est de forme annulaire.

8. Ensemble de robinet de fût selon l'une quelconque des revendications précédentes, dans lequel une coupelle est fournie dans l'extrémité supérieure de la tige ou du tube descendant pour recevoir le transpondeur.

9. Ensemble de robinet de fût selon la revendication 8, dans lequel la coupelle est fixée mécaniquement dans un évidement situé dans la tige ou le tube descendant.

10. Ensemble de robinet de fût selon la revendication 9, dans lequel la coupelle est fixée mécaniquement dans un évidement situé dans la tige ou tube descendant par l'intermédiaire d'un agencement de lèvre et de rebord coopérant.

11. Ensemble de robinet de fût selon l'une quelconque des revendications 1 à 10, dans lequel le transpondeur est isolé à l'encontre d'une détérioration mécanique.

12. Ensemble de robinet de fût selon la revendication 11, dans lequel l'isolation comporte un matériau de caoutchouc ou une matière plastique.

13. Ensemble de robinet de fût selon la revendication 12, dans lequel l'isolation est un caoutchouc nitrile.

14. Ensemble de robinet de fût selon la revendication 11, 12 ou 13, dans lequel l'isolation comporte un matériau non métallique à deux composants.

15. Ensemble de robinet de fût selon l'une quelconque des revendications 1 à 14, dans lequel, lorsque le transpondeur est situé dans un évidement, le transpondeur peut être enlevé et remplacé par enlèvement d'un matériau isolant entourant le transpondeur.

16. Ensemble de robinet de fût selon l'une quelconque des revendications précédentes, comportant deux transpondeurs ou plus.

17. Ensemble de robinet de fût selon l'une quelconque des revendications précédentes, du type à partie supérieure plate, ou du type à puits.

18. Fût pour un fluide mis sous pression comportant un ensemble de robinet selon l'une quelconque des revendications 1 à 17.
